# EUROPEAN PATENT APPLICATION

(11) **EP 4 234 488 A1**
(43) Date of publication of application: **30.08.2023**
(21) Application number: 21888919.4
(22) Date of filing: 10.09.2021
(51) Int. Cl.: C01B 25/45, C01G 23/00, C01G 53/00, H01M 4/139, H01M 4/1391, H01M 4/36, H01M 4/485, H01M 4/505, H01M 4/525, H01M 4/62, H01B 1/06, H01B 1/10

(54) **POSITIVE ELECTRODE COMPOSITE ACTIVE SUBSTANCE, LITHIUM ION SECONDARY BATTERY, COMPOSITE ACTIVE SUBSTANCE, METHOD FOR PRODUCING POSITIVE ELECTRODE COMPOSITE ACTIVE SUBSTANCE, AND METHOD FOR PRODUCING LITHIUM ION SECONDARY BATTERY**

(30) Priority: 05.11.2020 JP 2020184772; 25.02.2021 JP 2021029276; 22.03.2021 JP 2021047542; 30.03.2021 JP 2021057714
(71) Applicant: Kaneka Corporation, Osaka-shi, Osaka 530-8288 (JP)
(72) Inventor: IMAZAKI Mitsuyasu, Settsu-shi, Osaka 566-0072 (JP); IMAIZUMI Junichi, Settsu-shi, Osaka 566-0072 (JP); KIKUCHI Takashi, Settsu-shi, Osaka 566-0072 (JP); TOKIZANE Masashi, Settsu-shi, Osaka 566-0072 (JP)
(74) Representative: Hoffmann Eitle
(86) International application number: PCT/JP2021/033264
(87) International publication number: WO 2022/097366

(57) **Abstract**

The present invention provides a positive electrode composite active material, a lithium ion secondary battery, a method for producing a positive electrode composite active material, a method for producing a lithium ion secondary battery, and a composite active material, which can suppress the generation of a gas caused by the oxidative decomposition of a nonaqueous electrolytic solution as compared with the conventional technique. The positive electrode composite active material includes a positive electrode active material and an oxide-based solid electrolyte. The positive electrode active material is coated with the oxide-based solid electrolyte. The oxide-based solid electrolyte is represented by Li_{1+p+q+r}AlₚGa_{q}(Ti,Ge)_{2-p-q}SiᵣP₃₋ᵣO ₁₂ (0 < p ≤ 1, 0 ≤ q < 1, 0 ≤ r ≤ 1). The oxide-based solid electrolyte is layered and has a coating thickness of 5 nm or more and 50 nm or less. In the oxide-based solid electrolyte, an amorphous portion and a crystalline portion are mixed, and the amorphous portion is in contact with the positive electrode active material.

## Description

### TECHNICAL FIELD

The present invention relates to a positive electrode composite active material, a lithium ion secondary battery, and a composite active material. More specifically, the present invention relates to a positive electrode composite active material, a lithium ion secondary battery, and a composite active material which suppress gas generation during the operation at a high potential.

### BACKGROUND ART

Research and development of lithium ion secondary batteries have been actively conducted in a wide range of applications such as portable devices, hybrid vehicles, electric vehicles, and household storage batteries. Lithium ion secondary batteries used in these fields are required to have high safety, long-term cycle stability, and a high energy density and the like.

In recent years, lithium ion secondary batteries using lithium titanate (LTO) as a negative electrode active material have been proposed from the viewpoint of the high safety and the long-term cycle stability. Since the operation potential of lithium titanate is higher than that of graphite which is a general negative electrode active material, lithium does not easily deposit, and has an improved safety level. However, lithium titanate has a disadvantage from the viewpoint of the energy density.

Meanwhile, regarding a positive electrode active material, in consideration of the deposition potential of Li, a material that operates at a high potential of 4.5 V or more has been proposed (for example, Patent Document 1).

A decrease in the energy density caused by the high operation potential of lithium titanate is expected to be improved by combining a positive electrode active material that operates at a high potential as shown in Patent Document 1.

Meanwhile, also in conventional lithium ion secondary batteries using graphite as a negative electrode active material, gas is generated by the oxidative decomposition of a liquid nonaqueous electrolyte on the surface of a positive electrode active material, and the problem of gas generation becomes more remarkable in the case of a secondary battery in which the operation potential of a positive electrode active material is higher than that of the conventional secondary batteries.

A means of forming a coating film on the surface of the positive electrode by adding an additive to the nonaqueous electrolyte is also employed for the conventional lithium ion secondary batteries to suppress the gas generation.

Although a similar principle can be applied also to a high potential positive electrode active material in the formation of the coating film on the surface of the positive electrode, the coating film is required to have higher oxidation resistance, and thus it is considered that the effects are not sufficient.

In addition, Patent Document 2 is present as a related document.

### PRIOR ART DOCUMENTS

### PATENT DOCUMENTS

Patent Document 1: JP 2001-185148 A
Patent Document 2: WO 2020/049843 A1

### DISCLOSURE OF INVENTION

### TECHNICAL PROBLEM

However, in the above-described conventional technique, there is still room for improvement in the suppression of the gas generation in the case where the high potential positive electrode active material is used.

Therefore, an object of the present invention is to provide a positive electrode composite active material, a lithium ion secondary battery, a composite active material, a method for producing a positive electrode composite active material, and a method for producing a lithium ion secondary battery, which can suppress the generation of a gas caused by the oxidative decomposition of a nonaqueous electrolyte more than the conventional ones.

### SOLUTION TO PROBLEM

In view of the above problems, the present inventors have studied the above-described means for suppressing the gas generation. In recent years, some literature says that some solid electrolytes have conductivity close to that of a liquid electrolytic solution. Since the solid electrolyte is structurally stable, the crystal structure of the solid electrolyte is less likely to be destroyed even at a high potential, and a gas is less likely to be generated.

Therefore, it is considered that the generation of a gas caused through the decomposition of the nonaqueous electrolyte by the positive electrode active material can be suppressed by covering the surface of the positive electrode active material with the solid electrolyte so that the surface of the positive electrode active material should not be directly exposed to the nonaqueous electrolyte as in Patent Document 2.

The positive electrode composite active material is experimentally produced according to Patent Document 2. It has been found that when the thickness of the solid electrolyte increases, the amount of gas generation can be suppressed, but the increase in the resistance of the positive electrode composite active material due to the presence of the solid electrolyte tends to be high. It has been found that when the thickness of the solid electrolyte decreases, the increase in the resistance of the positive electrode composite active material due to the presence of the solid electrolyte tends to be small, but the effect of suppressing the gas generation tends to be small.

Therefore, as a result of studying in a state where the thickness of the solid electrolyte is changed, it has been found that when (1) the positive electrode active material is covered with the layered solid electrolyte, (2) the thickness is within a certain constant range, and (3) a crystalline portion in which a crystal structure is maintained and an amorphous portion in which a crystal structure is broken are mixed as well as the amorphous portion is satisfactorily in contact with the positive electrode active material, the decrease in conductivity due to the solid electrolyte and the gas generation can be suppressed.

One aspect of the present invention derived from the above findings is a positive electrode composite active material constituting a part of a positive electrode of a lithium ion secondary battery using a nonaqueous electrolyte, the positive electrode composite active material including: a positive electrode active material; and an oxide-based solid electrolyte, wherein the positive electrode active material is coated with the oxide-based solid electrolyte, wherein the oxide-based solid electrolyte is represented by Li_{1+p+q+r}AlₚGa_{q}(Ti,Ge)_{2-p-q}SiᵣP₃₋ᵣO₁₂ (0 < p ≤ 1, 0 ≤ q < 1, 0 ≤ r ≤ 1), wherein the oxide-based solid electrolyte is layered and has a coating thickness of 5 nm or more and 50 nm or less, and wherein in the oxide-based solid electrolyte, an amorphous portion and a crystalline portion are mixed, the amorphous portion being in contact with the positive electrode active material.

The term "amorphous portion" as used herein is an amorphous portion in which a crystal structure is not maintained, and for example, refers to a portion in which lattice fringes regularly arranged are not visible when observed at a magnification of 500,000 times with a transmission electron microscope.

The term "crystalline portion" as used herein is a portion in which a crystal structure is maintained, and for example, refers to a portion in which lattice fringes regularly arranged are visible when observed at a magnification of 500,000 times with a transmission electron microscope.

According to the present aspect, the surface of the positive electrode active material is coated with the oxide-based solid electrolyte in the form of a layer. Therefore, even when the positive electrode active material is used as a positive electrode active material of a lithium ion secondary battery using a nonaqueous electrolytic solution as a nonaqueous electrolyte, the nonaqueous electrolytic solution is not exposed to the positive electrode active material, and the generation of a gas caused by the oxidative decomposition of the nonaqueous electrolytic solution by the positive electrode active material can be suppressed.

According to the present aspect, Li_{1+p+q+r}AlₚGa_{q}(Ti,Ge)_{2-p-q}SiᵣP₃₋ᵣO₁₂ (0 < p ≤ 1, 0 ≤ q < 1, 0 ≤ r ≤ 1) (hereinafter, also simply referred to as LATP) is used as the oxide-based solid electrolyte, and the oxide-based solid electrolyte has a coating thickness of 5 nm or more and 50 nm or less. Therefore, resistance is small, and resistance loss due to the oxide-based solid electrolyte can be suppressed.

According to the present aspect, the oxide-based solid electrolyte is layered, the amorphous portion and the crystalline portion are mixed in the layer, and the amorphous portion is in contact with the positive electrode active material. Therefore, both lithium ion conductivity and a gas generation suppressing effect can be exhibited.

Here, based on the above findings, the surface of the positive electrode active material operating at a high potential was coated with LATP under various conditions for further examination.

As a result, the present inventors have found that the gas generation due to the oxidative decomposition of the nonaqueous electrolyte can be remarkably suppressed when the intensity ratio of a 4-coordination peak is 5% or less to a peak corresponding to Al (aluminum) when LATP is measured by solid NMR.

In a preferred aspect derived from the above findings, in the oxide-based solid electrolyte, an integrated intensity ratio of a 4-coordination peak to a total peak area of an Al peak as measured by solid NMR is 1% or more and 5% or less.

The present inventors have found that, in peaks corresponding to P (phosphorus) when LATP is measured by solid NMR, the gas generation can be remarkably suppressed when a peak top is present at 0 to -20 ppm and the integrated intensity ratio of the peak to the total peak area is 50% or more.

In a preferred aspect derived from the above findings, in the oxide-based solid electrolyte, an integrated intensity ratio of a peak from -20 to 0 ppm to a total peak area in a P peak as measured by solid NMR is 50% or more.

In a preferred aspect, the oxide-based solid electrolyte has an average particle size of 10 nm or less, and the positive electrode active material has a median diameter of 5 µm or more.

According to the present aspect, the particle size of the oxide-based solid electrolyte is extremely smaller than the particle size of the positive electrode active material, so that the oxide-based solid electrolyte forms a continuous layer that closely covers the surface shape of the positive electrode active material. Therefore, the nonaqueous electrolyte is less likely to be in direct contact with the positive electrode active material, to provide a high gas generation suppressing effect.

In a preferred aspect, the positive electrode active material is a lithium ion conductive active material having an operation potential of 4.5 V (vs. Li/Li⁺) or more.

According to the present aspect, even when the high-potential positive electrode active material having an operation potential of 4.5 V is used, the generation of a gas caused by the decomposition of the nonaqueous electrolyte can be suppressed.

In a preferred aspect, the positive electrode active material is a substitutional lithium manganese compound represented by the following formula (1):

Li₁₊ₓM_{y}Mn_{2-x-y}O₄, ... (1)

wherein in the formula (1), x and y respectively satisfy 0 ≤ x ≤ 0.2 and 0 < y ≤ 0.8, and M is at least one selected from the group consisting of Al, Mg, Zn, Ni, Co, Fe, Ti, Cu, and Cr.

According to the present aspect, the substitutional lithium manganese compound is used as the positive electrode active material, so that the substitutional lithium manganese compound has higher stability and a wider potential window than those of the conventional positive electrode active material such as lithium cobaltate.

One aspect of the present invention is a method for producing the positive electrode composite active material above, the method including the steps of: (a) dispersing an oxide-based solid electrolyte in a dispersion solvent to form an electrolyte dispersion; (b) grinding the electrolyte dispersion onto the positive electrode active material to form a grinded product; and (c) removing the dispersion solvent from the grinded product.

According to the present aspect, the surface of the positive electrode active material is easily coated with the oxide-based solid electrolyte.

According to a preferred aspect, in step (c), the dispersion solvent is removed by heat treatment at 300°C or higher.

In a preferred aspect, the method further includes pulverizing the oxide-based solid electrolyte to have an average particle size of 10 nm or less before step (a).

Meanwhile, when the surface of the positive electrode active material is coated with the oxide-based solid electrolyte, it is necessary to pulverize the oxide-based solid electrolyte to a BET specific surface area equivalent diameter of 100 nm or less.

Examples of the method for pulverizing the oxide-based solid electrolyte include wet pulverization and dry pulverization, and the wet pulverization has an advantage of being able to pulverize the oxide-based solid electrolyte to a smaller particle diameter than that by the dry pulverization.

Meanwhile, in the case of the wet pulverization, it is necessary to disperse the oxide-based solid electrolyte in a volatile solvent, pulverize the oxide-based solid electrolyte into a powder, and then volatilize the volatile solvent to extract the oxide-based solid electrolyte as a powder. When the volatile solvent is volatilized by applying heat in order to promote the volatilization of the volatile solvent, particles of the oxide-based solid electrolyte aggregate, which has a problem that variations occur when the surface of the positive electrode active material is coated with the oxide-based solid electrolyte in a later step.

Therefore, in a preferred aspect, in step (a), the oxide-based solid electrolyte is dispersed in a dispersion solvent while the oxide-based solid electrolyte is pulverized to have an average particle size of 10 nm or less.

According to the present aspect, the oxide-based solid electrolyte is simultaneously pulverized and dispersed in the dispersion solution in the electrolyte dispersion forming step, so that the aggregation of the oxide-based solid electrolyte is less likely to occur in the grinded product forming step, and variations in the coating of the surface of the positive electrode active material with the oxide-based solid electrolyte are less likely to occur.

One aspect of the present invention is a lithium ion secondary battery including: a positive electrode including the positive electrode composite active material described; a negative electrode; and a nonaqueous electrolytic solution.

According to the present aspect, even when the nonaqueous electrolytic solution is used, the generation of a gas in the nonaqueous electrolytic solution can be suppressed.

In a preferred aspect, the negative electrode includes a negative electrode active material including lithium titanate.

One aspect of the present invention is a method for producing a lithium ion secondary battery including a positive electrode, a negative electrode, and a nonaqueous electrolyte, the method including (d) applying a positive electrode mixture to a positive electrode current collector, the positive electrode mixture including the positive electrode composite active material above.

According to the present aspect, the lithium ion secondary battery is easily produced.

One aspect of the present invention is a positive electrode composite active material constituting a part of a positive electrode of a lithium ion secondary battery, the positive electrode composite active material including: a positive electrode active material; and an oxide-based solid electrolyte, wherein the positive electrode active material is coated with the oxide-based solid electrolyte, wherein the oxide-based solid electrolyte is represented by Li_{1+p+q+r}AlₚGa_{q}(Ti,Ge)_{2-p-q}SiᵣP₃₋ᵣO₁₂ (0 < p ≤ 1, 0 ≤ q < 1, 0 ≤ r ≤ 1), and wherein in the oxide-based solid electrolyte, an intensity ratio of a 4-coordination peak to an Al peak as measured by solid NMR is 1% or more and 5% or less.

According to the present aspect, the generation of a gas caused by the oxidative decomposition of the nonaqueous electrolyte can be suppressed as compared to the conventional technique.

One aspect of the present invention is a composite active material constituting a part of an electrode of a lithium ion secondary battery using a nonaqueous electrolyte, the composite active material including: an active material; and an oxide-based solid electrolyte, wherein the active material is coated with the oxide-based solid electrolyte, wherein the oxide-based solid electrolyte is represented by Li_{1+p+q+r}AlₚGa_{q}(Ti,Ge)_{2-p-q}SiᵣP₃₋ᵣO₁₂ (0 < p ≤ 1, 0 ≤ q < 1, 0 ≤ r ≤ 1), wherein the oxide-based solid electrolyte is layered and has a coating thickness of 5 nm or more and 50 nm or less, and wherein in the oxide-based solid electrolyte, an amorphous portion and a crystalline portion are mixed, and the amorphous portion is in contact with the active material.

According to the present aspect, even when the composite active material is used for an active material of a lithium ion secondary battery using a nonaqueous electrolytic solution as a nonaqueous electrolyte, the nonaqueous electrolytic solution is not exposed to the active material, and the generation of a gas caused by the oxidative decomposition of the nonaqueous electrolytic solution by the positive electrode active material can be suppressed.

According to the present aspect, resistance is small, and resistance loss due to the oxide-based solid electrolyte can be suppressed.

According to the present aspect, both lithium ion conductivity and a gas generation suppressing effect can be exhibited.

### EFFECT OF INVENTION

The present invention can suppress the generation of gas caused by the oxidative decomposition of a nonaqueous electrolytic solution more than the conventional techniques even when a positive electrode active material that operates at a high potential is used.

### BRIEF DESCRIPTION OF DRAWINGS

Fig. 1 is a cross-sectional view schematically showing a lithium ion secondary battery according to an embodiment of the present invention.
Fig. 2 is a diagram showing P peaks measured by solid NMR in Experimental Example 8.
Fig. 3 is a diagram showing P peaks measured by solid NMR in Experimental Example 9.
Fig. 4 is a diagram showing P peaks measured by solid NMR in Experimental Example 10.
Fig. 5 is a transmission electron microscope image showing the vicinity of an interface between LNMO and LATP in Experimental Example 12.
Fig. 6 is an enlarged transmission electron microscope image of a region A in Fig. 5.

### BEST MODE FOR CARRYING OUT THE INVENTION

A lithium ion secondary battery 1 according to an embodiment of the present invention will be described below, but the present invention is not limited thereto.

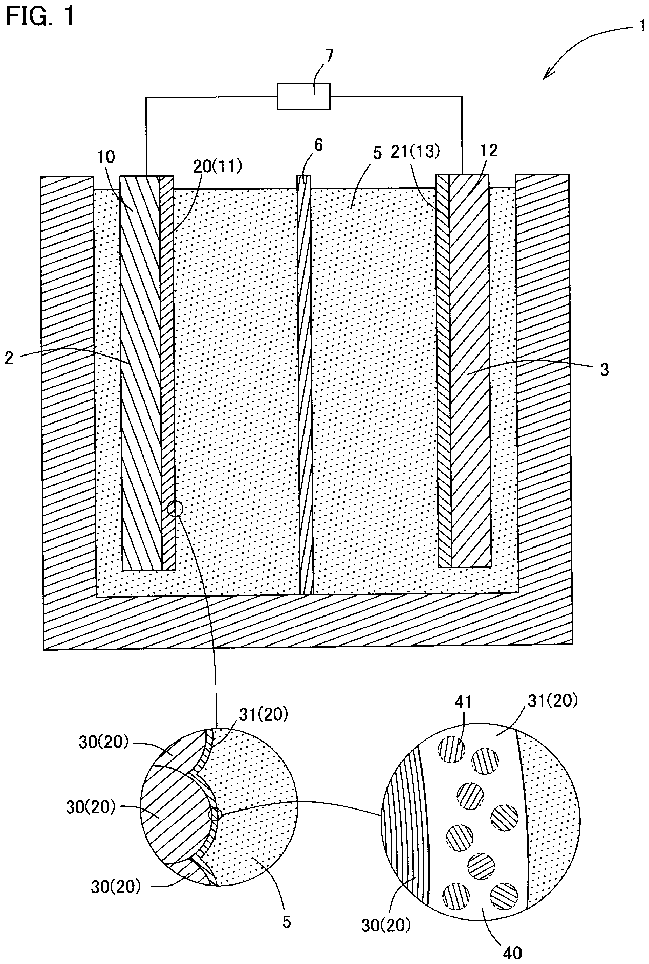

As shown in Fig. 1, the lithium ion secondary battery 1 includes a positive electrode 2, a negative electrode 3, a nonaqueous electrolyte 5, and a separator 6, and an external load 7 is connected to the positive electrode 2 and the negative electrode 3.

The positive electrode 2 is formed by laminating a positive electrode composite active material layer 11 containing a positive electrode composite active material 20 on a positive electrode current collector 10.

The negative electrode 3 is formed by laminating a negative electrode active material layer 13 containing a negative electrode active material 21 on a negative electrode current collector 12.

The positive electrode composite active material 20 is a coated positive electrode active material in which the surface of a positive electrode active material 30 is coated with an oxide-based solid electrolyte 31 (hereinafter, also simply referred to as a solid electrolyte 31).

In general, a nonaqueous electrolyte is used for a lithium ion secondary battery, and a nonaqueous electrolyte 5 (nonaqueous electrolytic solution) in a fluid state in which a lithium salt is dissolved in a nonaqueous solvent is used. Meanwhile, there is a solid electrolyte in a solid state having functions of both the nonaqueous solvent and the lithium salt. The solid electrolyte has higher oxidation resistance than that of the nonaqueous electrolyte in a liquid state, and thus the oxidative decomposition at a high potential is suppressed. However, since the lithium ion conductivity of the solid state is lower than that of the liquid state, the performance as a battery is greatly deteriorated if the whole electrolyte is replaced with the solid electrolyte.

Therefore, in the positive electrode composite active material 20 of the present embodiment, only the surface of the positive electrode active material 30 having a high potential is coated with the solid electrolyte 31, so that gas generation be suppressed even using the conventional nonaqueous electrolyte. That is, the lithium ion secondary battery 1 exhibits a gas generation suppressing effect even when the liquid nonaqueous electrolyte 5 is used as the nonaqueous electrolyte.

A method for coating the solid electrolyte 31 is not limited, but a method allowing uniform coating such as spray coating or mechanical coating is preferable.

The spray coating is preferable because the solid electrolyte 31 is dispersed in the solvent, so that adhesiveness and spreadability are imparted by the solvent, to allow uniform coating. When the solvent is volatilized by heat treatment, a heat treatment temperature is adjusted, and the particle size of the solid electrolyte 31 and the mixing ratio of the solid electrolyte to the positive electrode active material 30 are preferably controlled. As a result, the positive electrode active material 30 can be coated with the solid electrolyte 31 without substantially increasing the resistance of the positive electrode active material 30 and without deteriorating the battery performance.

The solid electrolyte 31 contains aluminum element, and an oxide-based solid electrolyte is used in consideration of chemical stability.

Examples of the oxide-based solid electrolyte used for the solid electrolyte 31 include, but are not limited to, an antifluorite type, a NASICON type, a perovskite type, and a garnet type depending on its crystal structure.

As the oxide-based solid electrolyte used for the solid electrolyte 31, for example, a solid electrolyte Li_{1+p+q+r}AlₚGa_{q}(Ti,Ge)_{2-p-q}SiᵣP₃₋ᵣO₁₂ (0 < p ≤ 1, 0 ≤ q < 1, 0 ≤ r ≤ 1) (hereinafter, also referred to as LATP) can be used, and in particular, Li₁₊ₚAlₚTi₂₋ₚP₃O₁₂ (0 ≤ p ≤ 1) is preferable. Since the solid electrolyte 31 is in a solid state, enormous energy of a certain level is required to coat the solid positive electrode active material 30.

Therefore, a method for coating the positive electrode active material 30 with the solid electrolyte 31 is preferably a mechanical coating method using a mechanochemical method capable of applying a shear force and a compressive force. By coating the positive electrode active material 30 with the solid electrolyte 31, the contact between the liquid nonaqueous electrolyte 5 and the positive electrode active material 30 can be reduced similarly as in the conventional nonaqueous electrolyte, thus suppressing the gas generation.

Furthermore, similarly to the spray coating, the heat treatment temperature is adjusted, and the particle size of the solid electrolyte 31 and the mixing ratio of the solid electrolyte 31 to the positive electrode active material 30 are preferably controlled. As a result, the positive electrode active material 30 can be coated with the solid electrolyte 31 without substantially increasing the resistance of the positive electrode active material 30 and without deteriorating the battery performance.

In the positive electrode composite active material 20, the positive electrode active material 30 is uniformly coated with the solid electrolyte 31 regardless of the coating method, so that the area of the positive electrode composite active material 20 in contact with the nonaqueous electrolyte 5 as an electrolytic solution is reduced, to suppress the gas generation. Even when the nonaqueous electrolyte 5 as the electrolytic solution or the additive is partially decomposed, a decomposition product fills the gap of the coating of the solid electrolyte 31 to form a good coating film, which makes it possible to suppress further decomposition of the electrolytic solution.

The solid electrolyte 31 in the positive electrode composite active material 20 can be evaluated by solid NMR measurement.

The solid electrolyte 31 in the positive electrode composite active material 20 can be evaluated by, for example, a spectrum of ²⁷ Al-NMR or a spectrum of ³¹P-NMR.

In order to exhibit good battery characteristics, the positive electrode composite active material 20 needs to be coated with the positive electrode active material 30 without the decomposition of the solid electrolyte 31.

Here, in the solid electrolyte Li_{1+p+q+r}AlₚGa_{q}(Ti,Ge)_{2-p-q}SiᵣP₃₋ᵣO₁₂ (0 < p ≤ 1, 0 ≤ q < 1, 0 ≤ r ≤ 1), aluminum is normally 6-coordinated to oxygen, but when the solid electrolyte is decomposed to generate AlPO₄, aluminum is 4-coordinated.

When pulverization is performed so as to promote crystal structure destruction, the amount of 4-coordinated aluminum is increased. It is considered that when the particles are micronized to about 1/30 as a particle size to decompose the surfaces of the particles, the original volume of 20% or more is decomposed to cause the 4-coordination of Al to account for 20% or more of the whole. Meanwhile, by pulverizing so as to suppress the crystal structure destruction, the generation of the 4-coordination of Al can be suppressed.

When the coordination number of aluminum changes, the peak position of the spectrum of solid ²⁷Al-NMR changes, so that the degree of the decomposition of the solid electrolyte 31 can be evaluated.

The ratio of 4-coordination to all peak intensities of the spectrum of aluminum is 1% or more and 5% or less, and more preferably 2% or more and 5% or less. In such a case, the gas generation can be suppressed.

That is, as for the spectrum of solid ²⁷Al-NNM of the solid electrolyte 31, the ratio of the maximum peak area (peak area attributed to 4-coordination) in the range of 30 ppm to 50 ppm to the total peak area is preferably 0.01 or more and 0.05 or less, and more preferably 0.02 or more and 0.05 or less.

As for the spectrum of solid ²⁷Al-NMR of the solid electrolyte 31, the ratio of the maximum peak area in a range of -30 ppm to 5 ppm (the peak area attributed to 6-coordination) to the maximum peak area in the range of 30 ppm to 50 ppm (the area of the peak attributed to 4-coordination) is preferably 85 or more and 95 or less.

In the solid electrolyte Li_{1+p+q+r}AlₚGa_{q}(Ti,Ge)_{2-p-q}SiᵣP₃₋ᵣO₁₂ (0 < p ≤ 1, 0 ≤ q < 1, 0 ≤ r ≤ 1), phosphorus usually takes only a single bonding state, and chemical shift having a peak top in -20 to -30 ppm is observed.

Meanwhile, when the particles are micronized, a bonding state due to micronization, particularly an atom bonded to oxygen that is bonded to phosphorus changes, and peaks having a peak top in -20 to 0 ppm are mixed or only the peaks are observed.

When the ratio of the integrated intensity of the peak from -20 to 0 ppm to the total peak intensity of the spectrum of phosphorus is 50% or more and 100% or less, more preferably 70% or more and 100% or less, the gas generation can be effectively suppressed.

### <Spray Coating Method>

The spray coating refers to a means which causes mist of a spray liquid containing a coating agent sprayed from a spray nozzle to wet a base material, and at the same time, causes a solid component contained in the spray liquid to adhere to the surface of the base material and to be dried and solidified to form a coating layer on the surface of the base material.

In the present invention, the positive electrode active material 30 corresponds to the base material, and the coating agent corresponds to the solid electrolyte 31. The apparatus to be used is not particularly limited, but for example, a fluidized bed coating apparatus, a centrifugal tumbling coating apparatus, or a tumbling fluidized bed coating apparatus can be suitably used.

In the treatment by the spray coating method, the solvent to be used is not particularly limited, and water and an organic solvent can be used. As the organic solvent, for example, an alcohol such as ethanol can be used. By mixing a polymer material such as polyethylene glycol or polyvinyl alcohol with the solvent, the aggregation of fine particles of the solid electrolyte 31 can be suppressed, and for example, the surface of the positive electrode active material 30 can be uniformly coated. When the solid electrolyte 31 is dispersed in the solvent, and the dispersion is spray-coated in a slurry state, the concentration of the solid electrolyte 31 in the slurry is, for example, 10 to 25 mass %.

The treatment temperature of the spray coating is preferably 5 to 100°C, more preferably 8 to 80°C, and still more preferably 10 to 50°C. A treatment time depends on the size of the apparatus, but is preferably 5 to 90 minutes, and more preferably 10 to 60 minutes. A treatment atmosphere is not particularly limited, and may be an inert gas atmosphere or an air atmosphere.

### <Mechanical Coating Method>

The mechanical coating method refers to a means which applies at least one kind of energy of shearing force, compressive force, impact force, and centrifugal force to a base material and/or a coating agent (preferably can apply shearing force and compressive force, and more preferably can apply shearing force, compressive force and impact force) and which at the same time mixes the base material with the coating agent to coat the surface of the base material with the coating material by mechanically bringing the base material and the coating agent into contact with each other.

In the positive electrode composite active material 20, the positive electrode active material 30 corresponds to the base material, and the coating agent corresponds to the solid electrolyte 31. The apparatus to be used is not particularly limited, and for example, a grinding mill represented by Nobilta manufactured by Hosokawa Micron Corporation or a planetary ball mill (for example, manufactured by Fritsch GmbH) can be suitably used.

Among them, a grinding mill is preferable from the viewpoints that the operation is simple, it is not necessary to separate balls after the treatment unlike a ball mill, coating proceeds preferentially rather than particle aggregation, and surface smoothness is easily obtained.

In the method for producing the positive electrode composite active material 20 of the present embodiment, a bottomed cylindrical vessel equipped with a rotor having an end blade is used, and a predetermined clearance is provided between the end blade and the inner circumference of the vessel. Then, the rotor is rotated. By rotating the rotor, compressive force and shearing force are preferably applied to a mixture containing the positive electrode active material 30 and the solid electrolyte 31, to conduct mechanical coating.

The treatment by the mechanical coating method may be a dry process or a wet process. In the case of the wet process, the solvent to be used is not particularly limited, and water or an organic solvent can be used. As the organic solvent, for example, an alcohol such as ethanol can be used. A timing for adding the solvent in the wet process is not particularly limited, and the solid electrolyte 31 may be dispersed in the solvent and used in a slurry state for the mechanical coating method. The concentration of the solid electrolyte 31 in the slurry is, for example, 10 to 30 wt. %, preferably 15 to 30 wt. %, and more preferably 15 to 25 wt. %.

The treatment temperature of the mechanical coating is preferably 5 to 100°C, more preferably 8 to 80°C, and still more preferably 10 to 50°C.

The treatment time of the mechanical coating is preferably 5 to 90 minutes, and more preferably 10 to 60 minutes.

The treatment atmosphere of the mechanical coating is not particularly limited, and may be an inert gas atmosphere or an air atmosphere.

The sample after the spray coating or the mechanical coating can be used as it is, but it is preferable to perform heat treatment.

As a result, the adhesion between the positive electrode active material 30 and the solid electrolyte 31 is improved, and the solid electrolyte 31 is suppressed from being peeled off from the positive electrode active material 30 even after repeated charging and discharging, so that the long-term reliability of the battery is improved.

### <Positive Electrode Active Material>

The positive electrode active material 30 of the present embodiment preferably has a potential of 4.5 V or more and 5.0 V or less, compared to the average potential of extraction and insertion of lithium, Li⁺/Li, that is, deposition potential of Li (sometimes referred to as vs. Li⁺/Li).

The positive electrode active material 30 preferably has an operation potential of 4.5 V or more and 5.0 V or less, using lithium metal of a single body as a standard.

The potential of the insertion/extraction reaction of lithium ions (hereinafter, also referred to as "voltage") (vs. Li⁺/Li) can be determined, for example, by measuring the charging and discharging characteristics of a half cell using the positive electrode active material 30 for a working electrode and lithium metal for a counter electrode, and reading voltage values at the beginning and end of a plateau. When there are two plateaus or more, the plateau with the lowest voltage value may be 4.5 V (vs. Li⁺/Li) or more, and the plateau with the highest voltage value may be 5.0 V (vs. Li⁺/Li) or less.

Although the positive electrode active material 30 is not particularly limited so long as the insertion/extraction reaction of lithium ions proceeds at a potential of 4.5 V or more and 5.0 V or less to the deposition potential of Li, a substituted lithium manganese compound represented by the following formula (1) is preferable.

Li₁₊ₓM_{y}Mn_{2-x-y}O₄ ... (1)

In the formula (1), x and y satisfy 0 ≤ x ≤ 0.2 and 0 < y ≤ 0.8, respectively, and M is at least one selected from the group consisting of Al, Mg, Zn, Ni, Co, Fe, Ti, Cu, and Cr.

Among the compounds of the above formula (1), a Ni-substituted lithium manganese compound (LNMO) in which M is Ni is preferable, and in particular, x=0, y=0.5, and M=Ni are preferable, that is, LiNi_{0.5}Mn_{1.5}O₄ is particularly preferable because it is highly effective on the stable charge-discharge cycle.

The particle size of the positive electrode active material 30 is not particularly limited, but when the particle size is too small, the difference from the particle size of the solid electrolyte 31, to be described below, becomes small, which causes difficulty in coating. Therefore, a median diameter d50 is preferably 5 µm or more, more preferably 10 µm or more, and still more preferably 20 µm or more.

The median diameter d50 of the positive electrode active material 30 is preferably 100 µm or less, more preferably 80 µm or less, still more preferably 50 µm or less, and particularly preferably 30 µm or less.

Considering also the thickness range for processing into an electrode, the median diameter d50 of the positive electrode active material 30 is preferably 10 µm or more, and more preferably 20 µm or more.

### <Solid Electrolyte 31>

In order to uniformly coat the surface of the positive electrode active material 30, the particle size of the solid electrolyte 31 of the present embodiment is preferably reduced to have a BET specific surface area equivalent diameter (dBET) of 10 nm or less, more preferably 8 nm or less, and still more preferably 6 nm or less.

The solid electrolyte 31 preferably has an average particle size of 10 nm or less, the average particle size being calculated using a small angle X-ray scattering method.

As the micronization treatment method, known means such as a ball mill or a bead mill can be used. The BET specific surface area equivalent diameter (dBET) is a particle size determined by the formula dBET=6/(density×BET specific surface area), where a nitrogen adsorption BET specific surface area is determined by a nitrogen adsorption single-point method according to the method defined by JIS-Z8830 (2013).

A ratio of the median diameter d50 of the positive electrode active material 30 to the BET specific surface area equivalent diameter dBET of the solid electrolyte 31 is preferably 10,000:1 to 50:1, more preferably 5000:1 to 100:1, still more preferably 2000:1 to 500:1, and particularly preferably 1000:1 to 100:1.

A difference between the median diameter d50 of the positive electrode active material 30 and the BET specific surface area equivalent diameter (dBET) of the solid electrolyte 31 is preferably as large as possible.

When the difference is small, the aggregation between the solid electrolytes 31 and the formation of the aggregate of the positive electrode active material 30 and the solid electrolyte 31 become more dominant than the coating of the positive electrode active material 30 with the solid electrolyte 31, which has a possibility that the intended effect is not exhibited.

The ratio of the solid electrolyte 31 (the solid content when used as a slurry) to 100 parts by mass of the positive electrode active material 30 is preferably 0.5 parts by mass or more, more preferably 1 part by mass or more, and still more preferably 2 parts by mass or more, and the ratio is preferably 10 parts by mass or less, more preferably 5 parts by mass or less, and still more preferably 4 parts by mass or less.

The ratio is preferably 1 part by mass or more and 5 parts by mass or less (that is, the mass ratio of the positive electrode active material 30 to the solid electrolyte 31 is 100:1 to 20:1), and it is also preferable that the ratio is also preferably 2 parts by mass or more and 4 parts by mass or less (that is, the mass ratio of the positive electrode active material 30 to the solid electrolyte 31 is 50:1 to 25:1).

When the surface of the positive electrode active material 30 is coated with the oxide-based solid electrolyte by the mechanical coating method after a pulverization step (nanoparticle-forming step) of performing the micronization treatment of the solid electrolyte 31 described later, it is necessary to adjust the solid electrolyte 31 to a state of being dispersed in a dispersion solvent (alcohol solution). Ethanol is preferable as the alcohol from the viewpoint of volatility and safety, but a mixture of a plurality of alcohol solutions may be used.

As shown in Fig. 1, the solid electrolyte 31 has an amorphous portion 40 and a crystalline portion 41.

The amorphous portion 40 is an amorphous portion having substantially no crystal structure, and is a portion in which lattice fringes of crystals are not confirmed when observed with a transmission electron microscope (TEM). That is, the amorphous portion 40 is a portion in which crystal fracture occurs in producing and which does not have a crystal structure.

The crystalline portion 41 is a portion having a crystal structure, and is a portion in which lattice fringes of regularly arranged crystals clearly appear when observed with a TEM. That is, the crystalline portion 41 is a portion in which crystal fracture does not occur in producing and which maintains a crystal structure.

In the solid electrolyte 31 covering the positive electrode active material 30 of one particle in a cross section passing through the positive electrode active material 30 and the solid electrolyte 31, it is preferable that the area of the amorphous portion 40 is larger than that of the crystalline portion 41, and the ratio of the area of the crystalline portion 41 occupied by the solid electrolyte 31 is 5% or more and 30% or less.

### <Lithium Ion Secondary Battery 1>

As shown in Fig. 1, a lithium ion secondary battery 1 includes a positive electrode 2, a negative electrode 3, and a nonaqueous electrolyte 5.

The positive electrode 2 is produced by applying a positive electrode mixture containing a positive electrode composite active material 20 (coated positive electrode active material), a conductive additive, a binder, and the like to a positive electrode current collector 10.

The positive electrode composite active material 20 is suitably used as the active material of the positive electrode 2 of the lithium ion secondary battery 1.

The negative electrode 3 is produced by applying a negative electrode mixture containing a negative electrode active material 21, a conductive additive, a binder, and the like to a negative electrode current collector 12.

The positive electrode 2 can be formed by applying the positive electrode mixture to the positive electrode current collector 10, and then drying the mixture at about 100 to 200°C.

The negative electrode 3 can be formed by applying the negative electrode mixture to the negative electrode current collector 12, and then drying the mixture at about 100 to 200°C.

To the configuration of the lithium ion secondary battery 1 using the positive electrode composite active material 20, materials used other than the positive electrode composite active material 20, and the producing apparatus and its conditions of the lithium ion secondary battery 1, those which are conventionally known can be applied, without any particular limitation.

### <Negative Electrode Active Material 21>

As described above, it is preferable to use lithium titanate as the negative electrode active material 21 from the viewpoint that lithium does not easily deposit and the safety is improved. Among lithium titanate, lithium titanate having a spinel structure is particularly preferable from the viewpoint that the expansion and shrinkage of the active material during the reaction of the insertion and extraction of lithium ions are small. The lithium titanate may contain, for example, a trace amount of an element other than lithium and titanium such as Nb.

### <Conductive additive>

A conductive additive is not particularly limited, but a carbon material is preferable. Examples of the carbon material include natural graphite, artificial graphite, vapor grown carbon fibers, carbon nanotubes, acetylene black, ketjen black, and furnace black.

These carbon materials may be used singly or in combination of two or more kinds thereof.

The amount of the conductive additive contained in the positive electrode 2 is preferably 1 part by weight or more and 30 parts by weight or less, and more preferably 2 parts by weight or more and 15 parts by weight or less, based on 100 parts by weight of the positive electrode composite active material 20.

Within the above range, the conductivity of the positive electrode 2 can be secured. Adhesiveness with the binder is maintained, and adhesiveness with the positive electrode current collector 10 can be sufficiently obtained.

The amount of the conductive additive contained in the negative electrode 3 is preferably 1 part by weight or more and 30 parts by weight or less, and more preferably 2 parts by weight or more and 15 parts by weight or less, based on 100 parts by weight of the negative electrode active material 21.

### <Binder>

The binder is not particularly limited, but for both the positive electrode 2 and the negative electrode 3, for example, at least one selected from the group consisting of polyvinylidene fluoride (PVdF), polytetrafluoroethylene (PTFE), styrene-butadiene rubber, polyimide, and derivatives thereof can be used.

The binder is preferably dissolved or dispersed in a nonaqueous solvent or water from the viewpoint that the positive electrode 2 and the negative electrode 3 are easily produced.

The nonaqueous solvent is not particularly limited, and examples thereof include N-methyl-2-pyrrolidone (NMP), dimethylformamide, dimethylacetamide, methyl ethyl ketone, methyl acetate, ethyl acetate, and tetrahydrofuran. A dispersant and a thickener may be added thereto.

The amount of the binder contained in the positive electrode 2 is preferably 1 part by weight or more and 30 parts by weight or less, and more preferably 2 parts by weight or more and 15 parts by weight or less, based on 100 parts by weight of the positive electrode composite active material 20.

Within the above range, adhesiveness between the positive electrode composite active material 20 and the conductive additive is maintained, and adhesiveness with the positive electrode current collector 10 can be sufficiently obtained.

The amount of the binder contained in the negative electrode 3 is preferably 1 part by weight or more and 30 parts by weight or less, and more preferably 2 parts by weight or more and 15 parts by weight or less, based on 100 parts by weight of the negative electrode active material 21.

### <Current Collectors 10, 12>

Both the positive electrode current collector 10 and the negative electrode current collector 12 are preferably made of aluminum or an aluminum alloy. Aluminum or an aluminum alloy is stable under a positive electrode reaction atmosphere and a negative electrode reaction atmosphere, and thus is not particularly limited, but high purity aluminum represented by those of JIS standards 1030, 1050, 1085, 1N90, and 1N99 and the like is preferable.

The thicknesses of the current collectors 10 and 12 are not particularly limited, but are preferably 10 µm or more and 100 µm or less. Within this range, a balance in handleability in producing the battery, costs, and characteristics of the obtained battery is easily kept. As the current collectors 10 and 12, those obtained by coating a surface of a metal other than aluminum (copper, SUS, nickel, titanium, and alloys thereof) with a metal which does not react at potentials of the positive electrode 2 and the negative electrode 3 can also be used.

### <Nonaqueous Electrolyte 5>

The nonaqueous electrolyte 5 is not particularly limited, but a nonaqueous electrolytic solution obtained by dissolving a solute in a nonaqueous solvent, and a gel electrolyte obtained by impregnating a polymer with a nonaqueous electrolytic solution obtained by dissolving a solute in a nonaqueous solvent, and the like can be used.

As the nonaqueous solvent, a cyclic aprotic solvent and/or a chain aprotic solvent are/is preferably contained. Examples of the cyclic aprotic solvent include cyclic carbonate, cyclic ester, cyclic sulfone, and cyclic ether. As the chain aprotic solvent, a solvent generally used as a solvent of a nonaqueous electrolyte such as a chain carbonate, a chain carboxylate ester, a chain ether, and acetonitrile may be used. More specifically, dimethyl carbonate, methyl ethyl carbonate, diethyl carbonate, dipropyl carbonate, methyl propyl carbonate, ethylene carbonate, propylene carbonate, butylene carbonate, γ-butyllactone, 1,2-dimethoxyethane, sulfolane, dioxolane, and methyl propionate and the like can be used. These solvents may be used singly or in combination of two or more kinds thereof, but a solvent obtained by mixing two or more kinds thereof is preferably used from the viewpoint of the easy dissolution of the solute to be described below and the high conductivity of lithium ions.

When two or more kinds are mixed, because of high stability at a high temperature and high lithium conductivity at a low temperature, one or more of chain carbonates exemplified by dimethyl carbonate, methylethyl carbonate, diethyl carbonate, dipropyl carbonate, and methylpropyl carbonate and one or more of cyclic compounds exemplified by ethylene carbonate, propylene carbonate, butylene carbonate, and γ-butyl lactone are preferably mixed. One or more of chain carbonates exemplified by dimethyl carbonate, methylethyl carbonate, and diethyl carbonate and one or more of cyclic carbonates exemplified by ethylene carbonate, propylene carbonate, and butylene carbonate are particularly preferably mixed.

The solute used for the nonaqueous electrolyte 5 is not particularly limited, but for example, LiClO₄, LiBF₄, LiPF₆, LiAsF₆, LiCF₃SO₃, LiBOB (Lithium Bis (Oxalato) Borate), and LiN (SO₂CF₃)₂ and the like are preferable because they are easily dissolved in a solvent. The concentration of the solute contained in the nonaqueous electrolyte 5 is preferably 0.5 mol/L or more and 2.0 mol/L or less. If the concentration of the solute is less than 0.5 mol/L, desired lithium ion conductivity may not be exhibited, whereas if the concentration of the solute is higher than 2.0 mol/L, the solute may not be dissolved anymore.

The amount of the nonaqueous electrolyte 5 is not particularly limited, but is preferably 0.1 mL or more and 10 mL or less per 1 Ah of battery capacity. With this amount, the conduction of lithium ions accompanying an electrode reaction can be secured, and desired battery performance is exhibited.

When the nonaqueous electrolyte 5 has fluidity, the nonaqueous electrolyte 5 may be contained in the positive electrode 2, the negative electrode 3, and the separator 6 in advance, or added after placing the separator 6 between the positive electrode 2 side and the negative electrode 3 side and winding or laminating the components.

The lithium ion secondary battery 1 usually further includes a separator 6 and an external material in addition to the above components.

### (Separator 6)

The separator 6 is placed between the positive electrode 2 and the negative electrode 3, and may have any structure as long as the separator has an insulating property and can contain the nonaqueous electrolyte 5. Examples thereof include woven clothes, nonwoven clothes, and microporous membranes and the like, which are made of nylon, cellulose, polysulfone, polyethylene, polypropylene, polybutene, polyacrylonitrile, polyimide, polyamide, or polyethylene terephthalate, or a composite of two or more kinds thereof.

The separator 6 is preferably a nonwoven fabric made of nylon, cellulose, polysulfone, polyethylene, polypropylene, polybutene, polyacrylonitrile, polyimide, polyamide, or polyethylene terephthalate, or a composite of two or more thereof, requiring excellent stability of cycle characteristics.

The separator 6 may contain various plasticizers, antioxidants, and flame retardants, or may be coated with a metal oxide or the like. The thickness of the separator 6 is not particularly limited, but is preferably 10 µm or more and 100 µm or less. Within this range, an increase in the resistance of the battery can be suppressed while a short circuit between the positive electrode 2 and the negative electrode 3 is prevented. From the viewpoint of economy and handling, the thickness of the separator 6 is more preferably 15 µm or more and 50 µm or less.

The porosity of the separator 6 is preferably 30% or more and 90% or less. When the porosity is 30% or more, the diffusibility of lithium ions is less likely to decrease, and thus the cycle characteristics are easily maintained. Meanwhile, when the porosity is 90% or less, the possibility that the unevenness of the electrode penetrates the separator 6 to cause a short circuit can be effectively suppressed.

The porosity of the separator 6 is more preferably 35% or more and 85% or less from the viewpoint of the balance of securing the diffusibility of lithium ions and preventing the short circuit, and is particularly preferably 40% or more and 80% or less because the balance is particularly excellent.

### (External Material)

The external material is a member that encloses: a laminate formed by alternately laminating or winding the positive electrode 2, the negative electrode 3, and the separator 6; and a terminal that electrically connects the laminate. As the external material, a composite film in which a thermoplastic resin layer for heat sealing is provided on a metal foil, or a metal layer formed by vapor deposition or sputtering can be used. A metal can having a polygon shape, an elliptical shape, a cylindrical shape, a coin shape, a button shape, or a sheet shape is suitably used.

Subsequently, a method for producing the lithium ion secondary battery 1 of the present embodiment will be described.

The method for producing the lithium ion secondary battery 1 of the present embodiment mainly includes a positive electrode forming step of forming the positive electrode 2, a negative electrode forming step of forming the negative electrode 3, and a secondary battery assembling step of assembling the positive electrode 2, the negative electrode 3, and the nonaqueous electrolyte 5. The negative electrode forming step and the secondary battery assembling step are the same as the conventional steps, and thus the description thereof will be omitted.

In the positive electrode forming step, first, a solid electrolyte 31 is pulverized by a pulverizer such as a ball mill so as to have an average particle size of 10 nm or less (pulverization step, nanoparticle-forming step).

Subsequently, the solid electrolyte 31 micronized in the pulverization step is dispersed in a dispersion solvent to form an electrolyte dispersion (electrolyte dispersion forming step).

The dispersion solvent used here is preferably one or more alcohol solutions as described above, and more preferably ethanol.

The electrolyte dispersion formed here is in a transparent sol state, i.e., a transparent sol, and is an electrolyte sol having fluidity. The solid electrolyte 31 in the electrolyte dispersion is partially amorphous due to the partial destruction of the crystal structure by the pulverization step.

Subsequently, the electrolyte dispersion is grinded onto a positive electrode active material 30 by a grinding apparatus such as a grinding mill to form a grinded product (a grinded product forming step).

Subsequently, the grinded product is subjected to heat treatment to remove the dispersion solvent from the grinded product, thereby forming a positive electrode composite active material 20 (removal step).

Here, the heat treatment temperature is preferably 300°C or higher, and more preferably 350°C or higher.

When the heat treatment temperature is lower than 300°C, the adhesion between the positive electrode active material 30 and the solid electrolyte 31 is insufficient, so that the solid electrolyte 31 may be peeled off during charging and discharging of the battery, leading to deterioration in the long-term reliability of the battery.

Meanwhile, when the heat treatment temperature is too high, the crystal structure of the solid electrolyte 31 changes, and the Li ion conductivity decreases, so that the battery may not be normally charged and discharged. Therefore, the heat treatment temperature is preferably 600°C or lower, and more preferably 500°C or lower. A heat treatment time is preferably 30 minutes or longer, more preferably 1 hour or longer, and the upper limit thereof is not particularly limited, but is, for example, 3 hours or shorter.

The positive electrode composite active material 20 obtained in the above step is mixed with a conductive additive and a binder to produce a positive electrode mixture, and the positive electrode mixture is applied to a positive electrode current collector 10 (positive electrode applying step).

Subsequently, the positive electrode current collector 10 to which the positive electrode mixture is applied is dried to form the positive electrode 2 (positive electrode drying step).

The positive electrode 2 formed in the above-described step is assembled, by using the conventional technique, together with the negative electrode 3 formed in the negative electrode forming step and the nonaqueous electrolyte 5 to complete the lithium ion secondary battery 1.

According to the positive electrode composite active material 20 of the present embodiment, the surface of the positive electrode active material 30 is coated in the form of a layer with the solid electrolyte 31, so that the generation of a gas caused by the oxidative decomposition of the nonaqueous electrolyte 5 can be suppressed.

According to the positive electrode composite active material 20 of the present embodiment, Li_{1+p+q+r}AlₚGa_{q}(Ti,Ge)_{2-p-q}SiᵣP₃₋ᵣO₁₂ (0 < p ≤ 1, 0 ≤ q < 1, 0 ≤ r ≤ 1) is used as the solid electrolyte 31, and the solid electrolyte 31 has a coating thickness of 5 nm or more and 50 nm or less. Therefore, resistance is small, and resistance loss due to the solid electrolyte 31 can be suppressed.

According to the positive electrode composite active material 20 of the present embodiment, the solid electrolyte 31 is layered, an amorphous portion 40 and a crystalline portion 41 are mixed, and the amorphous portion 40 is in contact with the positive electrode active material 30. Therefore, both lithium ion conductivity and a gas generation suppressing effect can be exhibited.

According to the positive electrode composite active material 20 of the present embodiment, in the solid electrolyte 31, an integrated intensity ratio of a 4-coordination peak to a total peak area of an Al peak as measured by solid NMR is 1% or more and 5% or less. Therefore, the generation of a gas caused by the oxidative decomposition of the nonaqueous electrolyte 5 can be further suppressed.

In the embodiment described above, the pulverization step of pulverizing the solid electrolyte 31 so that the average particle size is 10 nm or less is performed before the electrolyte dispersion forming step, but the present invention is not limited thereto. In the electrolyte dispersion forming step, the solid electrolyte 31 may be dispersed in the dispersion solvent while the solid electrolyte 31 is pulverized to have an average particle size of 10 nm or less.

As a result, the solid electrolyte 31 is pulverized and dispersed in the dispersion solvent at the same time in the electrolyte dispersion forming step, so that the positive electrode forming step can be simplified, the solid electrolyte 31 is less likely to aggregate in the grinded product forming step, and variations in the coating of the surface of the positive electrode active material 30 with the solid electrolyte 31 are less likely to occur.

In this case, in the electrolyte dispersion, the solid content concentration of the solid electrolyte 31 in the dispersion solvent is preferably 2% or more and 7% or less.

As the above-described application example, the positive electrode active material 30 is covered with the solid electrolyte 31 to form the positive electrode composite active material 20, but the negative electrode active material 21 may be covered with the solid electrolyte 31 to form the negative electrode composite active material. In this case, the negative electrode active material 21 is preferably a titanium oxide such as lithium titanate (for example, Li₄Ti₅O₁₂).

In the embodiments described above, the components can be freely replaced or added between the embodiments as long as it is included in the technical scope of the present invention.

### EXAMPLES

Hereinafter, the present invention will be more specifically described with reference to Experimental Examples.

The present invention is not limited by the following Experimental Examples, and can be of course carried out with appropriate changes in the scope which meets the purposes described above and below, which are all included in the technical scope of the present invention.

Batteries obtained in the following Experimental Examples were evaluated by the following methods.

### (Amount of Gas Generation)

The amount of gas generation of lithium ion secondary battery before and after the evaluation of cycle characteristics in each of Experimental Examples was evaluated by the Archimedes' method, that is, using the buoyancy of the lithium ion secondary battery. The evaluation was conducted as follows.

First, the weight of the lithium ion secondary battery was measured with an electronic balance. Next, the weight in water was measured using a densimeter (manufactured by Alfa Mirage Co., Ltd., product number: MDS-3000), and the buoyancy was calculated by taking the difference between the weights. The volume of the lithium ion secondary battery was calculated by dividing the buoyancy by the density of water (1.0 g/cm³). The amount of a generated gas was calculated by comparing the volume after aging to that after the following evaluation of the cycle characteristics. The amount of gas generation was determined to be good when the amount was less than 20 ml.

### (Evaluation of Cycle Characteristics of Lithium Ion Secondary Battery)

The lithium ion secondary batteries produced in Experimental Examples were connected to a charge/discharge apparatus (HJ1005SD8, manufactured by Hokuto Denko Corporation), and a cycle operation was performed. Constant current charging was performed under an environment at 60°C at a current value equivalent to 1.0 C until the battery voltage reached a final voltage of 3.4 V, and charging was stopped. Subsequently, constant current charging was performed at a current value equivalent to 1.0 C, and discharging was stopped when the battery voltage reached 2.5 V This was regarded as one cycle, and charging and discharging were repeated. The stability of the cycle characteristics was evaluated with a discharge capacity retention rate (%) which is the discharge capacity of the 500th cycle based on the discharge capacity of the first cycle regarded as 100. The cycle characteristics were determined to be good when the discharge capacity retention rate of the 500th cycle was 80% or more and to be poor when the retention rate was less than 80%.

### Synthesis Example 1

### (Production of Solid Electrolyte)

As a solid electrolyte, Li_{1.3}Al_{0.3}Ti_{1.7}(PO₄)₃ (hereinafter, also referred to as LATP) was prepared. Predetermined amounts of Li₂CO₃, AlPO₄, TiO₂, and NH₄H₂PO₄ as starting materials, and ethanol as a solvent were mixed, and planetary ball mill treatment was performed at 150 G for 1 hour using zirconia balls having a diameter of 3 mm. The zirconia balls were removed from the mixture after the treatment with a sieve, and ethanol was then removed by drying at 120°C. Then, treatment was performed at 800°C for 2 hours, to obtain a LATP powder.

A predetermined amount of ethanol as a solvent was mixed with the obtained LATP powder, and planetary ball mill treatment was performed for 1 to 3 hours using zirconia balls having a diameter of 0.5 mm. The zirconia balls were removed from the mixture after the treatment with a sieve, and ethanol was then removed by drying at 120°C. As a result, a LATP fine powder having a dBET of 3 to 25 nm was obtained. Next, the LATP fine powder and ethanol were mixed to obtain a slurry (electrolyte dispersion) in which 16.4 wt. % of the LATP fine powder as a solid electrolyte was dispersed in ethanol.

### (Experimental Example 1)

### (i) Production of Positive Electrode

As an active material of a positive electrode, spinel type lithium nickel manganate (LiNi_{0.5}Mn_{1.5}O₄, hereinafter, also referred to as LNMO) having a median diameter of 20 µm was used.

First, 40 g of LNMO was charged into a grinding mill (manufactured by Hosokawa Micron Corporation, product name: Nobilta), and 6.1 g of a slurry in which the LATP fine powder pulverized for 3 hours in Synthesis Example 1 was dispersed in ethanol was charged in two portions, while the grinding mill was rotated at 2600 rpm with a clearance of 0.6 mm and a rotor load power of 1.5 kW. Then, treatment was performed at room temperature for 10 minutes under an air atmosphere while the rotor rotation speed was kept in the range of 2600 to 3000 rpm, to obtain LNMO having a surface coated with LATP. The obtained surface-coated LNMO was heat-treated at 350°C for 1 hour to obtain a positive electrode composite active material.

A mixture containing the obtained positive electrode composite active material (surface-coated LNMO), acetylene black as a conductive additive, and polyvinylidene fluoride (PVdF) as a binder, each respectively showing 90 parts by weight, 6 parts by weight, and 4 parts by weight at solid concentrations, was dispersed in N-methyl-2-pyrrolidone (NMP), to produce a slurry. The binder used here was obtained by preparing an N-methyl-2-pyrrolidone (NMP) solution having a solid concentration of 5 wt. %, and the viscosity was adjusted by further adding NMP so as to facilitate coating to be described later.

An aluminum foil of 20 µm was coated with the slurry, and then dried in an oven at 120°C. This operation was performed on both surfaces of the aluminum foil, and the aluminum foil was then vacuum-dried at 170°C to produce a positive electrode.

### (ii)Production of Negative Electrode

As a negative electrode active material, spinel type lithium titanate (Li₄Ti₅O₁₂, hereinafter, also referred to as LTO) was used. A mixture respectively containing the LTO, acetylene black as a conductive additive, and polyvinylidene fluoride (PVdF) as a binder each respectively showing 100 parts by weight, 5 parts by weight, and 5 parts by weight at solid concentrations, was dispersed in N-methyl-2-pyrrolidone (NMP), to produce a slurry. The binder used here was obtained by preparing an NMP solution having a solid concentration of 5 wt. %, and the viscosity was adjusted by further adding NMP so as to facilitate coating to be described later.

An aluminum foil of 20 µm was coated with the slurry, and then dried in an oven at 120°C. This operation was performed on both surfaces of the aluminum foil, and the aluminum foil was then vacuum-dried at 170°C to produce a negative electrode.

### (iii) Production of Lithium Ion Secondary Battery

A battery was produced by the following procedure using the positive electrode and the negative electrode produced in the above (i) and (ii) and a separator made of polypropylene of 20 µm.

First, the positive electrode and the negative electrode were dried under reduced pressure at 80°C for 12 hours. Next, 15 positive electrodes and 16 negative electrodes were used and laminated in the order of negative electrode/separator/positive electrode. Both the outermost layers were the separators. Next, aluminum tabs were attached by vibration welding to the positive electrode and the negative electrode at both ends.

Two aluminum laminate films as external materials were formed, and after forming a hollow for a battery part and a follow for a gas collection part by pressing, the electrode laminate was inserted.

The outer peripheral portion was heat-sealed at 180°C for 7 seconds, leaving a space for injecting a nonaqueous electrolyte. A nonaqueous electrolyte obtained by dissolving LiPF₆ at a proportion of 1 mol/L in a solvent of a mixture was introduced from the unsealed part. The mixture was obtained by mixing ethylene carbonate, propylene carbonate, and ethyl methyl carbonate at a ratio by volume of ethylene carbonate/propylene carbonate/ethyl methyl carbonate=15/15/70. Then, the unsealed part was heat-sealed at 180°C for 7 seconds while the pressure was decreased.

The obtained battery was charged at a constant current of a current value equivalent to 0.2 C until the battery voltage reached a final voltage of 3.4 V, and charging was stopped. Then, the battery was left still in an environment at 60°C for 24 hours. Constant current discharging was then performed at a current value equivalent to 0.2 C, and discharging was stopped when the battery voltage reached 2.5 V After stopping discharging, the gas gathered in the gas collection part was removed, and the battery was sealed again. Through the above operations, a lithium ion secondary battery for evaluation was produced.

### (Experimental Example 2)

A lithium ion secondary battery for evaluation was produced by performing the same operations as in Experimental Example 1 except that a surface-coated LNMO was produced by spray coating using a tumbling fluidization apparatus in the production of a positive electrode.

### (Experimental Example 3)

A lithium ion secondary battery for evaluation was produced by performing the same operations as in Experimental Example 1 except that the particle size of LATP was the same but the ratio of 4-coordination Al spectral in ²⁷Al-NMR was 5% or more in the production of a positive electrode.

### (Experimental Example 4)

A lithium ion secondary battery for evaluation was produced by performing the same operations as in Experimental Example 1 except that the particle diameter of LATP was about 10 nm and a 4-coordination Al spectral ratio in ²⁷AI-NMR was 5% or more in the production of a positive electrode.

### (Experimental Example 5)

A lithium ion secondary battery for evaluation was produced by performing the same operations as in Experimental Example 1 except that the particle diameter of LATP was about 20 nm and the ratio of 4-coordination Al spectral in ²⁷Al-NMR was 5% or more in the production of a positive electrode.

### (Experimental Example 6)

A lithium ion secondary battery for evaluation was produced by performing the same operations as in Experimental Example 2 except that the particle diameter of LATP was about 20 nm and the ratio of 4-coordination Al spectral in ²⁷Al-NMR was 5% or more in the production of a positive electrode.

### (Experimental Example 7)

A lithium ion secondary battery for evaluation was produced by performing the same operations as in Experimental Example 1 except that LNMO obtained without surface coating was used.

The evaluation results of Experimental Examples 1 to 7 are shown in Table 1.

### [Table 1]

**Table 1**

| | Particle diameter (nm) | 4-cordination intensity ratio (%) | Coating method | Heat treatment temerature (°C) | Amount of gas generation (ml) | Cycle characteristics (capacity retention rate ) (%) |
|---|---|---|---|---|---|---|
| Experiment Example 1 | 3 | 3.4 | Mecanical coating | 350 | 8 | 91 |
| Experiment Example 2 | 5 | 4.1 | Spray coating | 350 | 9 | 90 |
| Experiment Example 3 | 4 | 6.2 | Mecanical coating | 350 | 15 | 84 |
| Experiment Example 4 | 11 | 5.5 | Mecanical coating | 350 | 13 | 85 |
| Experiment Example 5 | 23 | 5.6 | Mecanical coating | 350 | 12 | 87 |
| Experiment Example 6 | 21 | 6 | Mecanical coating | 350 | 14 | 84 |
| Experiment Example 7 | - | - | Spray coating | - | 40 | 60 |

The lithium ion secondary batteries of Experimental Examples 1 and 2 resulted in a remarkably lower amount of gas generation in the evaluation of the cycle characteristics and a higher capacity retention rate than those of the conventional technique. That is, in Experimental Examples 1 and 2, the amount of gas generation was 10 ml or less, and the capacity retention rate was 90% or more.

Meanwhile, Experimental Example 3 in which the particle diameter was the same as those in Experimental Examples 1 and 2 but the ratio of 4-coordination ratio was more than 5% resulted in a lower amount of gas generation than that of Experimental Example 7 that was not coated with the solid electrolyte and a capacity retention rate equivalent to that of Experimental Example 7, but resulted in a higher amount of gas generation and a lower capacity retention rate than those of Experimental Examples 1 and 2.

Experimental Examples 4 and 5 in which the particle diameter was larger than that of Experimental Examples 1 and 2 resulted in a lower amount of gas generation than that of Experimental Example 7 that was not coated with the solid electrolyte and a capacity retention rate equivalent to that of Experimental Example 7, but resulted in a higher amount of gas generation and a lower capacity retention rate than those of Experimental Examples 1 and 2.

Furthermore, Experimental Example 6 in which the ratio of 4-coordination intensity was large despite of the changed coating method resulted in a lower amount of gas generation than that of Experimental Example 7 that is not coated with the solid electrolyte and a capacity retention rate equivalent to that of Experimental Example 7, but resulted in a higher amount of gas generation and a lower capacity retention rate than those of Experimental Examples 1 and 2. That is, the ratio of 4-coordination intensity of Al was suggested to contribute to the amount of gas generation and the cycle characteristics.

As described above, a peak of 6-coordination should be dominant in LATP, but it is presumed that when LATP is decomposed and AlPO₄ is formed, the crystal structure is destroyed, and a peak of 4-coordination appears. The intensity ratio of 4-coordination is considered to be related to the production amount of AlPO₄. The above results suggested that the production amount of AlPO₄ is suppressed to a certain amount or less when AlPO₄ is formed, thereby improving the amount of gas generation and the cycle characteristics.

### (Experimental Example 8)

A positive electrode was produced in the same manner as in Experimental Example 1 except that spinel type lithium nickel manganate (LiNi_{0.5}Mn_{1.5}O₄, hereinafter, also referred to as LNMO) having a median diameter of 12 µm was used as an active material of the positive electrode.

That is, a positive electrode was produced in the same manner as in Experimental Example 1 except that 40 g of LNMO was charged into a grinding mill (manufactured by Hosokawa Micron Corporation, product name: Nobilta), and 6.1 g of a slurry in which the LATP fine powder pulverized for 1 hour in Synthesis Example 1 was dispersed in ethanol was charged in two portions, while the grinding mill was rotated at 2600 rpm with a clearance of 0.6 mm and a rotor load power of 1.5 kW.

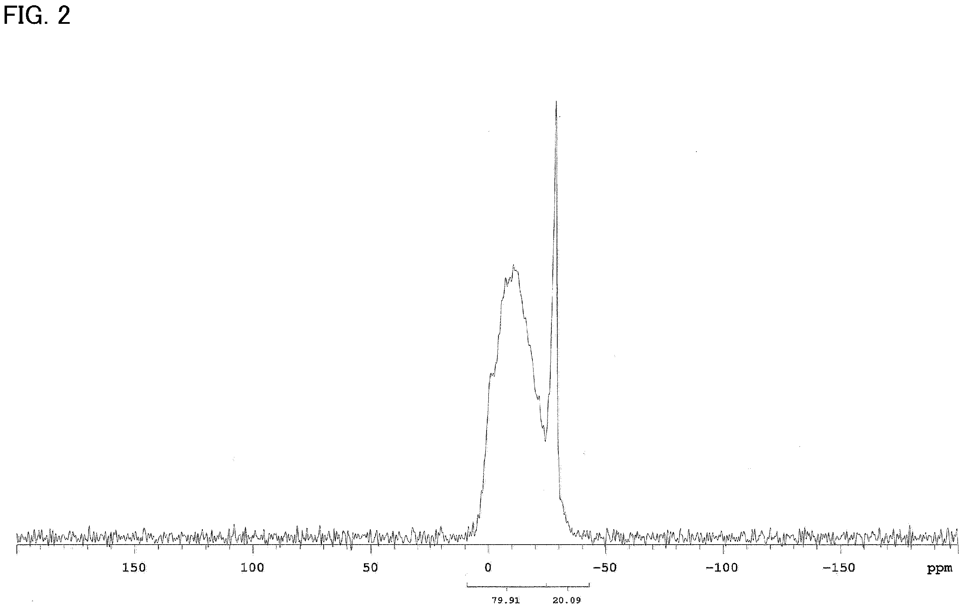

The particle size of the pulverized LATP was 6 nm, and the peak intensity ratio at 0 to -20 ppm in ³¹P-NMR measurement was 80%. NMR measurement was performed using VNMRS600 manufactured by VARIAN. The NMR measurement results are shown in Fig. 2.

### (Experimental Example 9)

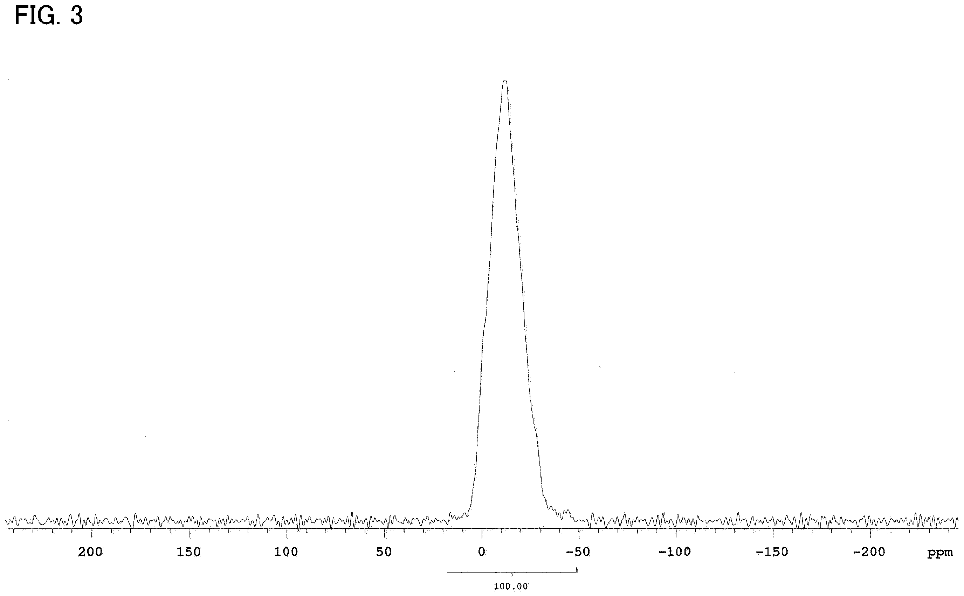

A lithium ion secondary battery for evaluation was produced by performing the same operations as in Experimental Example 8 except that in the production of a positive electrode, the pulverization time of LATP was set to 3 hours, and that particles of LATP having a particle size of 3 nm and an 100% integral ratio of a peak present at 0 to -20 ppm in 31P-NMR were bonded to produce a surface-coated LNMO. The NMR measurement results are shown in Fig. 3.

### (Experimental Example 10)

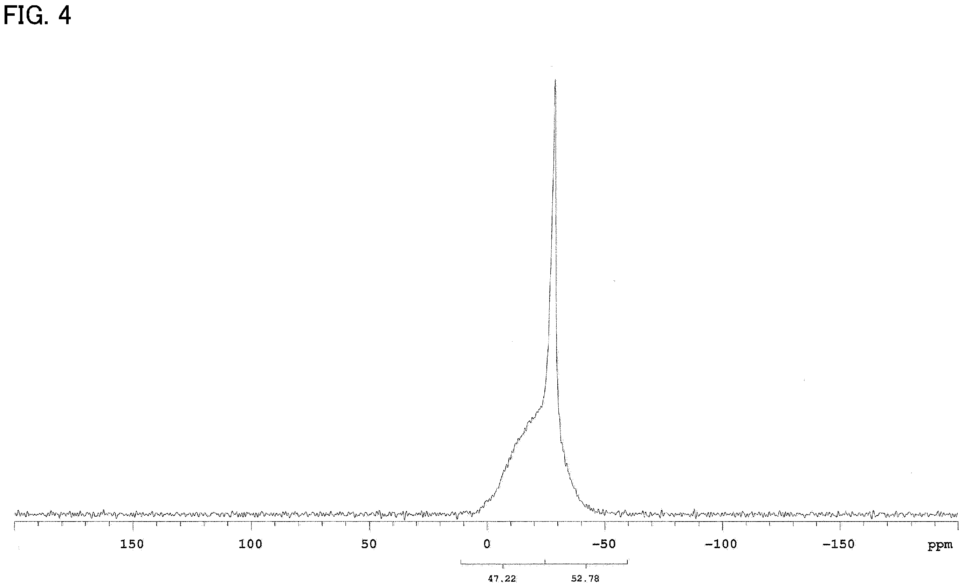

A lithium ion secondary battery for evaluation was produced by performing the same operations as in Experimental Example 8 except that in the production of a positive electrode, a pulverization time was set to 30 minutes, particles of LATP having a particle size of 9 nm and a 47% integral ratio of a peak present at 0 to -20 ppm in 31P-NMR were used. The NMR measurement results are shown in Fig. 4.

### (Experimental Example 11)

A lithium ion secondary battery for evaluation was produced by performing the same operations as in Experimental Example 8 except that LNMO obtained without surface coating was used.

The evaluation results of Experimental Examples 8 to 11 are shown in Table 2.

### [Table 2]

**Table 2**

| | Particle diameter (nm) | Ratio of 0 to -20ppm in 31P peak (%) | Coating method | Heat treatment temerature (°C) | Amount of gas generation (ml) | Cycle characteristics (capacity retention rate ) (%) |
|---|---|---|---|---|---|---|
| Experiment Example 8 | 6 | 80 | Mecanical coating | 300 | 8 | 91 |
| Experiment Example 9 | 3 | 100 | Mecanical coating | 300 | 8 | 90 |
| Experiment Example 10 | 12 | 47 | Mecanical coating | 300 | 14 | 84 |
| Experiment Example 11 | - | - | - | - | 40 | 60 |

The lithium ion secondary batteries of Experimental Examples 8 and 9 in which the integrated intensity ratio of the peak of 0 to -20 ppm in the ³¹P peak was 50% or more of the total peak area resulted in a remarkably lower amount of gas generation in the evaluation of the cycle characteristics and a higher capacity retention rate than those of Experimental Example 11 that was not coated with the solid electrolyte.

The binding state of phosphorus is considered to be changed by micronizing the solid electrolyte, leading to improvements in a gas generation suppressing effect and cycle characteristics.

Meanwhile, Experimental Example 10 in which the particle diameter was 12 nm, which was larger than those in Experimental Examples 8 and 9, and a ratio of a peak present in - 20 to 0 ppm in ³¹P-NMR was 47% resulted in a lower amount of gas generation than that of Experimental Example 11 that was not coated with the solid electrolyte and a capacity retention rate equivalent to that of Experimental Example 11 but resulted in a higher amount of gas generation and a lower capacity retention rate than those of Experimental Examples 8 and 9. This is considered to be because the particle pulverization of LATP is insufficient, and the binding state of phosphorus does not have a structure for suppressing gas generation.

### (Experimental Example 12)

In the production of a positive electrode, a surface-coated LNMO was heat-treated at 400°C for 1 hour to obtain a positive electrode composite active material.

The positive electrode composite active material of Experimental Example 12 was observed with a transmission electron microscope (TEM).

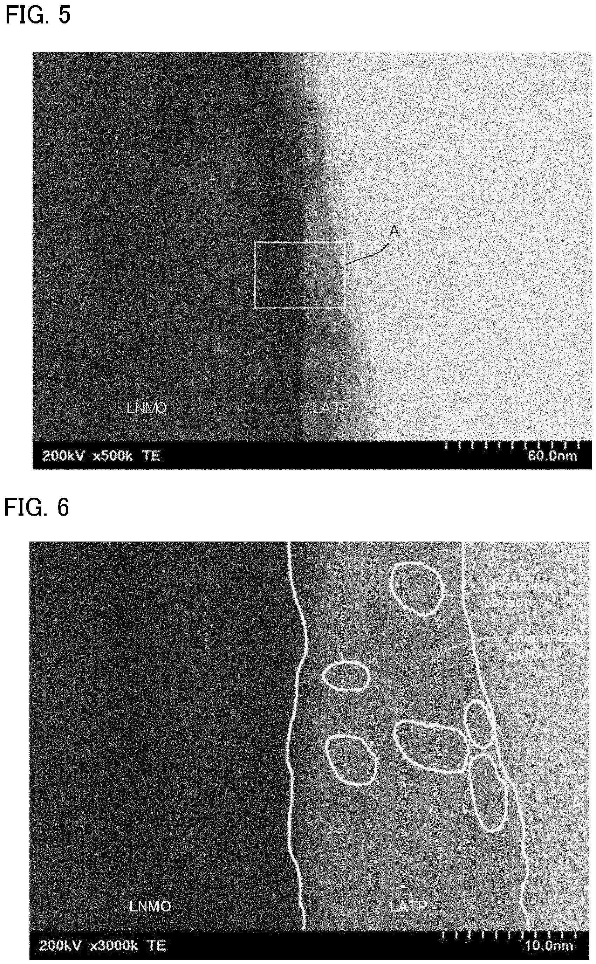

In the positive electrode composite active material, as shown in Fig. 5, a positive electrode active material was coated in the form of a layer with a solid electrolyte, and the thickness of the solid electrolyte was about 40 nm.

In the positive electrode composite active material of Experimental Example 12, as shown in Fig. 6, an amorphous portion in which a crystal arrangement was not confirmed and a crystalline portion in which a regular crystal arrangement was confirmed were mixed. In the positive electrode composite active material of Experimental Example 12, the amorphous portion was in contact with LNMO as the positive electrode active material.

These results are considered to be due to the generation of a portion maintaining the crystal structure of LATP, and a portion not capable of maintaining the crystal structure of LATP but amorphized or a portion locally decomposed into aluminum phosphate (AlPO₃).

### (Experimental Example 13)

### (iv) Production of Positive Electrode

A positive electrode was produced by performing the same operations as in (i) of Experimental Example 1 except that LNMO obtained without surface coating was used.

### (v)Production of Coated Negative Electrode Active Material

First, a slurry (electrolyte dispersion) was obtained in the same manner as in the production of a solid electrolyte of Synthesis Example 1 except that planetary ball mill treatment was performed for 3 to 6 hours.

Spinel type lithium titanate (Li₄Ti₅O₁₂, hereinafter, also referred to as LTO) having a median diameter of 10 µm was used as a negative electrode active material. Here, 40 g of LTO was charged into a grinding mill (manufactured by Hosokawa Micron Corporation, Nobilta), and 6.1 g of a transparent sol-state slurry pulverized for 3 hours was charged in two portions, while the grinding mill was rotated at 2600 rpm with a clearance of 0.6 mm and a rotor load power of 1.5 kW. Then, treatment was performed at room temperature for 10 minutes under an air atmosphere while the rotor rotation speed was kept in the range of 2600 to 3000 rpm, to obtain LTO having a surface coated with LATP. The obtained surface-coated LTO was heat-treated at 350°C for 1 hour to obtain a coated negative electrode active material.

### (vi) Production of Negative Electrode

A mixture respectively containing the obtained surface-coated LTO, acetylene black as a conductive additive, and polyvinylidene fluoride (PVdF) as a binder, respectively 90 parts by weight, 5 parts by weight, and 5 parts by weight at solid concentrations, was dispersed in N-methyl-2-pyrrolidone (NMP), to produce a negative electrode mixture. The binder used here was obtained by preparing an N-methyl-2-pyrrolidone (NMP) solution having a solid concentration of 5 wt. %, and the viscosity was adjusted by further adding NMP so as to facilitate coating to be described later.

An aluminum foil of 20 µm was coated with the negative electrode mixture, and then dried in an oven at 120°C. This operation was performed on both surfaces of the aluminum foil, and the aluminum foil was then vacuum-dried at 170°C to produce a negative electrode.

### (vii) Production of Lithium Ion Secondary Battery

Using the positive electrode and the negative electrode produced in the above (iv) and (vi), a lithium ion secondary battery for evaluation was produced in the same manner as in (iii) of Experimental Example 1.

### (Experimental Example 14)

A coated negative electrode active material was produced by performing the same operations as in Experimental Example 13 except the amount of LATP coated in a transparent sol state was set to 9.1 g in the production of a coated negative electrode active material. The other conditions were the same as in Example 13, and the coated negative electrode active material was used as Experimental Example 14.

### (Experimental Example 15)

A negative electrode active material was produced by the same operations as in Example 1 except that LTO without surface coating was used. The other conditions were the same as in Example 1, and the negative electrode active material was used as Experimental Example 15.

The evaluation results of Experimental Examples 13 to 15 are shown in Table 3.

### [Table 3]

**Table 3**

| | Particle diameter (nm) | Coating method | Amount of LATP (g) | Heat treatment temerature (°C) | Amount of gas generation (ml) | Cycle characteristics (capacity retention rate ) (%) |
|---|---|---|---|---|---|---|
| Experiment Example 13 | 3 | Mecanical coating | 6.1 | 350 | 18 | 90 |
| Experiment Example 14 | 5 | Mecanical coating | 9.1 | 350 | 17 | 88 |
| Experiment Example 15 | - | - | - | - | 40 | 60 |

The lithium ion secondary batteries of Examples 13 and 14 resulted in a lower amount of gas generation in the evaluation of cycle characteristics and a higher capacity retention rate than those of Experimental Example 15 that was not coated with LATP.

From this result, it was found that cycle characteristics can be improved as well as gas generation is suppressed by coating the negative electrode active material with the solid electrolyte.

From the above results, it became clear that the lithium ion secondary battery using the positive electrode composite active substrate in which the surface of the positive electrode active material operating at a high potential is coated with the solid electrolyte containing at least aluminum has a low amount of gas generation and good cycle characteristics even when the lithium ion secondary battery is charged and discharged at a high potential.

It was found that by suppressing the intensity ratio of a 4-coordination peak of Al of the positive electrode composite active material to 5% or less, the amount of gas generation can be reduced, and the cycle characteristics can be improved.

Furthermore, it became clear that the lithium ion secondary battery using the positive electrode active material in which the surface of the positive electrode active material operating at a high potential is coated with the solid electrolyte containing at least phosphorus has a low amount of gas generation and good cycle characteristics even when the lithium ion secondary battery is charged and discharged at a high potential.

It was suggested that in the positive electrode composite active material, the oxide-based solid electrolyte is layered and has a coating thickness of 5 nm or more and 50 nm or less, the amorphous portion and the crystalline portion are mixed, and the amorphous portion is in contact with the positive electrode active material, so that the gas generation can be suppressed by LATP or AlPO₃ corresponding to the amorphous portion, and lithium can be rapidly inserted and desorbed by LATP corresponding to the crystalline portion.

It became clear that the cycle characteristics can be improved while the gas generation is suppressed by coating the negative electrode active material with the solid electrolyte.

### EFFECT OF INVENTION

The composite active material of the present invention is suitably used as the active material of the electrode of the lithium ion secondary battery.

### EXPLANATION OF REFERENCE SIGNS

1: Lithium ion secondary battery
2: Positive electrode
3: Negative electrode
5: Nonaqueous electrolyte
10: Positive electrode current collector
21: Negative electrode active material
30: Positive electrode active material
31: Oxide-based solid electrolyte
40: Amorphous Portion
41: Crystalline portion

## Claims

1. A positive electrode composite active material constituting a part of a positive electrode of a lithium ion secondary battery using a nonaqueous electrolyte,
the positive electrode composite active material comprising: a positive electrode active material; and an oxide-based solid electrolyte,
wherein the positive electrode active material is coated with the oxide-based solid electrolyte,
wherein the oxide-based solid electrolyte is represented by Li_{1+p+q+r}AlₚGa_{q}(Ti,Ge)_{2-p-q}SiᵣP₃₋ᵣO₁₂ (0 < p ≤ 1, 0 ≤ q < 1, 0 ≤ r ≤ 1),
wherein the oxide-based solid electrolyte is layered and has a coating thickness of 5 nm or more and 50 nm or less, and
wherein in the oxide-based solid electrolyte, an amorphous portion and a crystalline portion are mixed, the amorphous portion being in contact with the positive electrode active material.

2. The positive electrode composite active material according to claim 1, wherein in the oxide-based solid electrolyte, an integrated intensity ratio of a 4-coordination peak to a total peak area of an Al peak as measured by solid NMR is 1% or more and 5% or less.

3. The positive electrode composite active material according to claim 1 or 2, wherein in the oxide-based solid electrolyte, an integrated intensity ratio of a peak from -20 to 0 ppm to a total peak area in a P peak as measured by solid NMR is 50% or more.

4. The positive electrode composite active material according to any one of claims 1 to 3,
wherein the oxide-based solid electrolyte has an average particle size of 10 nm or less, and
wherein the positive electrode active material has a median diameter of 5 µm or more.

5. The positive electrode composite active material according to any one of claims 1 to 4, wherein the positive electrode active material is a lithium ion conductive active material having an operation potential of 4.5 V (vs. Li/Li⁺) or more.

6. The positive electrode composite active material according to any one of claims 1 to 5, wherein the positive electrode active material is a substitutional lithium manganese compound represented by the following formula (1):
Li₁₊ₓM_{y}Mn_{2-x-y}O₄,... (1)
wherein in the formula (1), x and y respectively satisfy 0 ≤ x ≤ 0.2 and 0 < y ≤ 0.8, and M is at least one selected from the group consisting of Al, Mg, Zn, Ni, Co, Fe, Ti, Cu, and Cr.

7. A method for producing the positive electrode composite active material according to any one of claims 1 to 6, the method comprising the steps of:
(a) dispersing an oxide-based solid electrolyte in a dispersion solvent to form an electrolyte dispersion;
(b) grinding the electrolyte dispersion onto the positive electrode active material to form a grinded product; and
(c) removing the dispersion solvent from the grinded product.

8. The method according to claim 7, wherein in step (c), the dispersion solvent is removed by heat treatment at 300°C or higher.

9. The method according to claim 7 or 8, further comprising pulverizing the oxide-based solid electrolyte to have an average particle size of 10 nm or less before step (a).

10. The method according to claim 7 or 8, wherein in step (a), the oxide-based solid electrolyte is dispersed in a dispersion solvent while the oxide-based solid electrolyte is pulverized to have an average particle size of 10 nm or less.

11. A lithium ion secondary battery comprising: a positive electrode including the positive electrode composite active material according to any one of claims 1 to 6; a negative electrode; and a nonaqueous electrolytic solution.

12. The lithium ion secondary battery according to claim 11, wherein the negative electrode comprises a negative electrode active material including lithium titanate.

13. A method for producing a lithium ion secondary battery including a positive electrode, a negative electrode, and a nonaqueous electrolyte,
the method comprising (d) applying a positive electrode mixture to a positive electrode current collector, the positive electrode mixture including the positive electrode composite active material according to any one of claims 1 to 6.

14. A positive electrode composite active material constituting a part of a positive electrode of a lithium ion secondary battery,
the positive electrode composite active material comprising: a positive electrode active material; and an oxide-based solid electrolyte,
wherein the positive electrode active material is coated with the oxide-based solid electrolyte,
wherein the oxide-based solid electrolyte is represented by Li_{1+p+q+r}Al_{pG}a_{q}(Ti,Ge)_{2-p-q}SiᵣP₃₋ᵣO₁₂ (0 < p ≤ 1, 0 ≤ q < 1, 0 ≤ r ≤ 1), and
wherein in the oxide-based solid electrolyte, an intensity ratio of a 4-coordination peak to an Al peak as measured by solid NMR is 1% or more and 5% or less.

15. A composite active material constituting a part of an electrode of a lithium ion secondary battery using a nonaqueous electrolyte,
the composite active material comprising: an active material; and an oxide-based solid electrolyte,
wherein the active material is coated with the oxide-based solid electrolyte,
wherein the oxide-based solid electrolyte is represented by Li_{1+p+q+r}AlₚGa_{q}(Ti,Ge)_{2-p-q}SiᵣP₃₋ᵣO₁₂ (0 < p ≤ 1, 0 ≤ q < 1, 0 ≤ r ≤ 1),
wherein the oxide-based solid electrolyte is layered and has a coating thickness of 5 nm or more and 50 nm or less, and
wherein in the oxide-based solid electrolyte, an amorphous portion and a crystalline portion are mixed, and the amorphous portion is in contact with the active material.
